Europäisches Patentamt

European Patent Office

Office européen des brevets

(19)

(11) Veröffentlichungsnummer: **0 033 712**
**B1**

# (12) EUROPÄISCHE PATENTSCHRIFT

(45) Veröffentlichungstag der Patentschrift :
28.12.83

(21) Anmeldenummer : 81810009.1

(22) Anmeldetag : 12.01.81

(51) Int. Cl.³ : **B 22 D 13/04**, B 22 D 19/00,
B 60 B 1/08, B 60 B 3/06

(54) Vorrichtung zum Herstellen von Fahrzeugrädern.

(30) Priorität : 30.01.80 CH 761/80

(43) Veröffentlichungstag der Anmeldung :
12.08.81 Patentblatt 81/32

(45) Bekanntmachung des Hinweises auf die Patenterteilung : 28.12.83 Patentblatt 83/52

(84) Benannte Vertragsstaaten :
AT CH FR GB IT LI NL SE

(56) Entgegenhaltungen :
EP-A- 0 017 619
CH-B-   347 466
DE-A- 2 215 966
US-A- 3 859 704
US-A- 4 153 657

(73) Patentinhaber : SCHWEIZERISCHE ALUMINIUM AG
CH-3965 Chippis (CH)

(72) Erfinder : Zulauf, Herbert
Kirchweg 47
CH-8245 Feuerthalen (CH)

EP 0 033 712 B1

## Vorrichtung zum Herstellen von Fahrzeugrädern

Die Erfindung betrifft eine Vorrichtung zum Herstellen von Fahrzeugrädern mit von einer kranzartigen Felge umgebenem, gegossenem Radkörper, beispielsweise einer Radscheibe oder -schüssel, mit wenigstens einer den auszugiessenden Formraum begrenzenden Werkzeugwandung.

Da Räder, Achsen und zugehörige Haltevorrichtungen an Fahrzeugen ungefederte Massen bilden, ist es für Fahrsicherheit und Fahrkomfort wichtig, dass sowohl Material als auch Verbindung von Felge und Radkörper optimiert wird.

Bekannt sind einstückig gegossene Räder, deren Herstellungskosten wegen des in den meisten Fällen verhältnismässig grossen Aufwandes für die Giessformen sehr hoch sind und ihre Zähigkeit gering ist. Ausserdem muss bei der Herstellung solcher Räder mit verhältnismässig hohen Ausschussquoten gerechnet werden.

Deshalb werden Felge und Radkörper in der Regel gesondert hergestellt und dann miteinander verbunden. Bekannt ist beispielsweise die Verbindung von Felge und Radkörper mit Hilfe von Schrauben oder Nieten oder durch Schweissen oder Kleben. Den hohen mechanischen Anforderungen an das Fahrzeugrad sowie Anforderungen an erforderliche Toleranzen und die Dichtheit für den Einsatz des Rades bei schlauchlosen Reifen kann in vielen Fällen bei der Anwendung dieser Verbindungsart nicht entsprochen werden.

Weiterhin ist bekannt, den Radkörper und die Felge mit Hilfe von Diffusionsschichten zu verbinden. Hierbei besteht jedoch das Risiko des Abschälens infolge der aus dem sogenannten Schwinden herrührenden, nicht vollständig vermeidbaren Spannungen. Nachteilig ist auch der verhältnismässig grosse erforderliche Aufwand zum Verbinden der betreffenden Teile. Weiterhin besteht bei den in den heutigen Giessverfahren verwendeten verschiebbaren Formteilen für das Felgenbett die Gefahr, dass diese beim Erwärmen unrund werden.

Stand der Technik ist auch der Einsatz von Fahrzeugrädern aus reinem Halbzeug, wobei jedoch eine eingeschränkte Gestaltungsmöglichkeit gegeben ist.

Unter Bezugnahme auf die Artikel 54 (3) und (4) wird auf die EP-A-17619 hingewiesen, aus welcher ein Fahrzeugrad bekannt ist, welches aus einem mit einer Felge verbundenen Radkörper besteht, wobei Felge und Radkörper formschlüssig miteinander verbunden sind. Dabei wird eine vorgefertigte Felge in eine Gussform eingesetzt und in der Form ausgegossen. Die formschlüssige Verbindung entsteht insbesondere durch das Einfliessen des schmelzflüssigen Metalls in an der Innenseite der Felge angeordneten Rillen oder Zähnen, so dass nach dem Erkalten des Gussmetalls die Radschüssel unlösbar mit der Felge verbunden ist.

Der Erfinder hat sich zum Ziel gesetzt, eine Vorrichtung der vorgenannten Art zu entwickeln, bei welcher die beschriebenen Nachteile ganz oder wenigstens teilweise vermieden und insbesondere eine gute Verbindung von Radkörper zu Felge mit einwandfreiem Gefüge, eine Vereinfachung des Formwerkzeuges, eine Erhöhung der Produktionsgeschwindigkeit und eine Verringerung der Formkosten erzielt werden.

Gegenüber der EP-A-17619 soll insbesondere eine Vorrichtung geschaffen werden, mittels derer das Herstellen von mit einer Felge formschlüssig verbundenen Radkörpern erleichtert und der Arbeitsvorgang beschleunigt wird.

Diese Aufgaben werden dadurch gelöst, dass einer Formplatte eine Zwischenplatte gegenüberliegt, zwischen denen die Felge angeordnet ist und deren einander zugekehrte Plattenflächen zusammen mit der Felge Formteile für den Radkörper sind, und dass den Platten eine weitere Formplatte zugeordnet ist, welche Einrichtungen zum Einbringen des Gusswerkstoffes aufweist, wobei um die Felge wenigstens ein Klemmring angeordnet ist.

Die Felge ist vorzugsweise im Rollform-, Tiefzieh-, Druck- oder Strangpressverfahren hergestellt und besteht beispielsweise aus Stahl, Magnesium oder Aluminium.

Dies Vorrichtung hat unter anderem den Vorteil, dass die Felge als Formteil für den Radkörper dient. Damit entfällt der in bekannten Giessverfahren benötigte verschiebbare Formteil für das Felgenbett. Bei Wegfall dieses Schiebers vereinfacht sich aber das Formwerkzeug erheblich, wodurch die Produktionsgeschwindigkeit gesteigert und die Formkosten gesenkt werden können. Zudem entfällt die Gefahr, dass das Rad durch Verformen des Schiebers unrund wird.

Der weiteren Vereinfachung des Werkzeuges bzw. seiner Handhabung dient ein Klemmring, der die Felge umgibt und hält. Dieser Klemmring ist vorzugsweise doppellagig ausgebildet, wobei zwischen beiden Lagen eine Sprüheinrichtung für ein Kühlmedium vorgesehen ist. Das Kühlmedium wird auf die Felge gesprüht, läuft an dieser ab und sammelt sich wieder in einer Auffangrinne. Einfachheitshalber wird als Kühlmedium Wasser verwendet.

Durch diese erfindungsgemässe Einrichtung kann nicht nur eine zielgerichtete Erstarrung des Gusswerkstoffes eingeleitet, sondern auch ein einwandfreies dendritisches Gefüge im Verbundbereich erzielt werden. Ferner besteht die Möglichkeit, bereits vergütete Felgen einzusetzen, ohne dass beim Giessvorgang ein Weichglühen der Felge erfolgt. Dadurch wird auch die Schwingungsfestigkeit erhöht.

Weitere vorteilhafte Ausgestaltungen der Erfindung sind in den Unteransprüchen dargestellt, die im folgenden kommentiert werden.

Der Klemmring selbst besteht vorzugsweise aus zwei Halbringen und kann aus dem Werkzeug herausgefahren werden. Damit wird die Entnahme des fertigen Rades und das Einsetzen einer neuen Felge erleichtert. Diesem Ziel dient auch, dass zumindest ein Halbring an einem Gelenk drehbar gelagert und so von dem anderen Halbring trennbar ist.

Beide Halbringe tragen einends abkragende Schenkel, welche vorzugsweise mit dem Gelenk verbunden sind, und andernends abkragende Schulterstücke. Sowohl Schulterstücke als auch Schenkel weisen zueinander keilförmig verlaufende Einschnitte oder Flächen auf, welche in Korrespondenz mit an der Zwischenplatte angebrachten Klemmvorrichtungen den Verschluss der beiden Halbringe bewirken. Die Klemmvorrichtung besteht einfachheitshalber aus einer U-förmigen Gabel, welche über die beiden Schulterstücke bzw. Schenkel greift und durch dessen keilförmige Fläche bzw. Einschnitt klemmt.

An die Schenkel ist ein Stab angelenkt, der in einer Führungsbuchse geführt und über eine Antriebsvorrichtung parallel zur Mittelachse des Klemmringes bewegt wird. Dies ermöglicht das Herausfahren der Felge und des Klemmringes aus dem Werkzeug.

Zur Verhinderung einer möglichen Verkantung beim Herausfahren ist beispielsweise eine zusätzliche Halterung in Form einer dem Klemmring angeformten Lasche mit einem anschliessenden Führungsstab vorgesehen.

Die Felge selbst ist auf ihrer Innenfläche mit etwa in Radialrichtung abragenden Vorsprüngen versehen, welche sich vorzugsweise in einen querschnittlich T-förmigen Mittelsteg und diesen beidseits flankierenden Schenkelstegen aufteilen. Die Schenkelstege bilden mit dem zwischen ihnen liegenden Teil des Felgenprofils eine Klammer, wobei die Mittelachsen der Schenkelstege mit der Mittelachse des Mittelsteges vor dem eigentlichen Herstellungsvorgang des Radkörpers einen spitzen Winkel bilden.

Vor dem Einbringen des Gussmaterials in die zwischen Schenkelsteg und Mittelsteg gebildeten Höhlungen wird der Druck von Formplatte zu Zwischenplatte erhöht, was ein Verbiegen der freien Enden der Schenkelstege zur Folge hat, wobei eine Dichtung entsteht. Im Endzustand verlaufen die Mittelachsen der Schenkelstege etwa parallel zur Mittelachse des Mittelsteges. Dadurch wird die zwischen Schenkelsteg und Mittelsteg gebildete Höhlung zu einer hinterschnittenen Nut, was erheblich zu einer innigen Verbindung von Felge und Radkörper beiträgt. Ein weiterer wesentlicher Vorteil dieser Gestaltung ist das Erzielen einer gleichmässigen Abdichtung im Verbundbereich. An der Verbundstelle entsteht ein einwandfreies Gefüge ohne Hohlräume.

Die Erfindung sieht weiterhin vor, dass die Plattenflächen gegebenenfalls an einem Einsatz angeformt sind, der austauschbar in der vorzugsweise beweglichen Formplatte bzw. der Zwischenplatte angeordnet ist. Damit können sie bei Verschleiss leicht entfernt und durch neue ersetzt werden. Dies garantiert die Herstellung massgetreuer Räder mit geringem Aufwand.

Zum Einbringen des Druckgusses ist an der zweiten meist unbeweglichen Formplatte und einer diese begrenzenden Aufspannplatte eine den Gusswerkstoff enthaltende Füllbüchse vorzugsweise exzentrisch angeordnet, wobei mittels eines Druckkolbens der Gusswerkstoff bevorzugt unter hohem Druck durch eine Oeffnung in einen Hohlraum für den Anguss und durch einen Angusskegel in der Zwischenplatte in den Formraum zwischen den Plattenflächen und der Felge gepresst wird.

Für die Erzeugung der Radnabe ist ein Dorn vorgesehen.

Andernends von der Aufspannplatte begrenzt eine weitere Aufspannplatte die Vorrichtung, wobei gegebenenfalls zwischen ihr und der beweglichen Formplatte an Ausstosserplatten angeformte Ausstosser angeordnet sind, welche ein Ablösen der Felge und des Radkörpers von der Formplatte ermöglichen.

Zur Herstellung von Fahrzeugrädern der vorgenannten Art wird die Felge vorgefertigt und zwischen einander zugekehrte Plattenflächen einer Formplatte sowie einer Zwischenplatte gelegt, wobei die Plattenflächen und die Felge Ausformungen des Radkörpers erzeugen, während der zwischen den Plattenflächen und der Felge gebildete Formraum durch unter Druck eingebrachten Gusswerkstoff ausgefüllt wird.

Das Einlegen der Felge erfolgt mittels des Klemmringes, der zwischen Dorn und an einer Aufspannplatte angelenkten Führungsbolzen aus dem Werkzeug herausgefahren wird. Ein Halbring des Klemmringes wird aufgeklappt, die Felge eingelegt, der Klemmring wieder geschlossen und in das Werkzeug zurückgefahren. Nunmehr wird die bewegliche Formplatte in Richtung Zwischenplatte gefahren, so dass die Führungsbolzen in Ausnehmungen in der Formplatte eingreifen. Durch die einander zugekehrten Plattenflächen der Formplatte und der Zwischenplatte wird die Felge zentriert.

Sobald alle drei Platten zusammenliegen, wird der Pressdruck auf die bewegliche Formplatte erhöht und gleichzeitig mittels des Druckkolbens Gusswerkstoff aus der Füllbüchse über den Hohlraum und den Angusskegel in den von den Plattenflächen und der Felge gebildeten Formraum mit hohem Druck eingepresst.

Durch den Pressdruck der beweglichen Formplatte auf die Zwischenplatte werden die unter einer Vorspannung stehenden Schenkelstege so verbogen, dass ihre Mittelachsen etwa parallel zur Mittelachse des Mittelsteges verlaufen.

Durch die T-förmige Ausformung des Mittelsteges entsteht so eine hinterschnittene Nut, welche eine sehr gut Verbindung von Radkörper und Felge bewirkt.

Gleichzeitig wird die Felge mit einem Kühlmedium besprüht, was unter anderem auch ein rasches Erkalten des gegossenen Radkörpers zur Folge hat.

Danach wird die bewegliche Formplatte wieder zurückgezogen, der Klemmring mit dem fertigen

Rad aus dem Formraum zwischen Dorn und Führungsbolzen herausgefahren, geöffnet und das Rad entnommen.

Weitere Vorteile der Erfindung ergeben sich aus der nachfolgenden Beschreibung bevorzugter Ausführungsbeispiele sowie anhand der Zeichnung ; diese zeigt in

Figur 1 eine teilweise geschnittene Seitenansicht einer Vorrichtung zum Herstellen von Fahrzeugrädern ;

Figur 2 eine Querschnitt nach Linie II-II in Fig. 1 ;

Figur 3 einen vergrösserten Querschnitt durch eine Felge vor Einbringen des Gusswerkstoffes ;

Figur 4 einen vergrösserten Querschnitt durch eine Felge und einen Teil eines Formeinsatzes nach dem Herstellen eines Radkörpers.

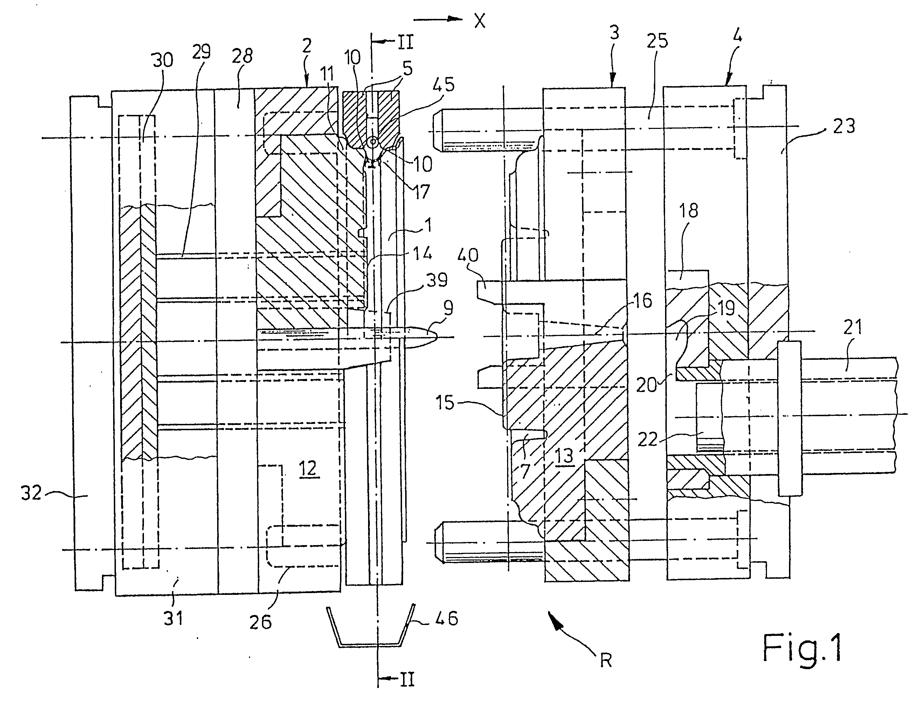

Bei einer Vorrichtung R zum Herstellen von Fahrzeugrädern liegt nach Fig. 1 eine Felge 1 mit einer ihrer Kreisflächen an einer beweglichen Formplatte 2 an, welcher eine Zwischenplatte 3 und eine fetstehende Formplatte 4 zugeordnet ist und mit denen sie zusammen ein Werkzeug bildet.

Die Felge 1 wird durch einen doppellagigen Klemmring 5 in der gewünschten Position gehalten. Dieser liegt der Felge 1 zwischen Felgenschulter 10 und Felgenhorn 11 eng an. Die beiden Felgenschultern 10 begrenzen ein Felgenbett 17.

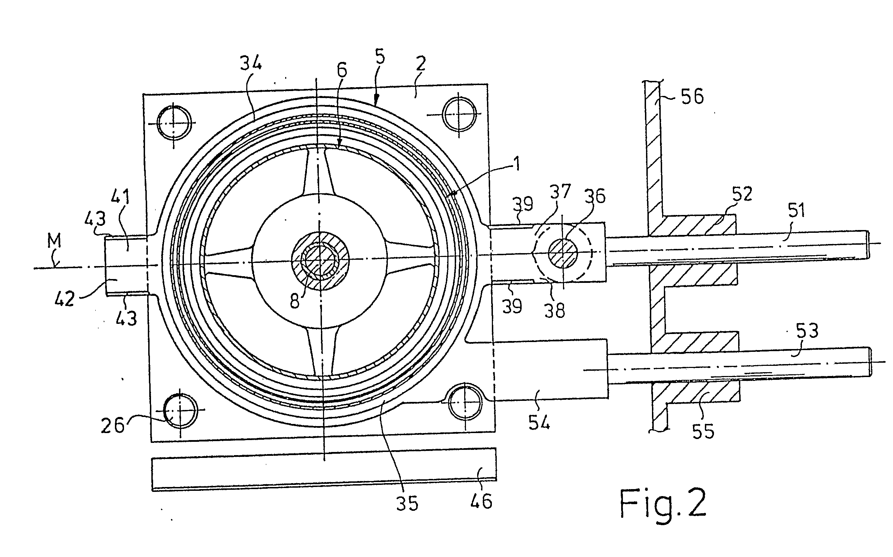

Formplatte 2 und Zwischenplatte 3 weisen jeweils einen Einsatz 12 und 13 auf, deren sich gegenüberliegende Plattenflächen 14 und 15 Aussenkonturen tragen, welche den zu formenden Aussenflächen eines Radkörpers 6 (Fig. 2) und der Innenkontur der Felge 1 entsprechen. So bilden z. B. die sacklochartigen Einformungen 7 einen eine — nich dargestellte — Bremstrommel umfangenden Teil. Eine Radnabe 8 wird durch einen den Einsatz 12 durchbohrenden Dorn 9 angedeutet.

Die Zwischenplatte 3 wird mittig von einem sich zur Formplatte 4 hin verjüngenden Angusskegel 16 durchstossen.

An die der Formplatte 4 zugewandten Oeffnung des Angusskonus 16 schliesst in einem Einsatzteil 18 der Formplatte 4 ein Hohlraum 19 für einen Abreissanguss an. Dieser steht durch eine Oeffnung 20 mit einer exzentrisch in der Formplatte 4 angeordneten Füllbüchse 21 in Verbindung, in welcher ein Druckkolben 22 gelagert ist. Füllbüchse 21 und Druckkolben 22 durchstossen ebenfalls exzentrisch auch eine das Werkzeug einerseits begrenzende Aufspannplatte 23.

In die Aufspannplatte 23 sind vier Führungsbolzen 25 eingesetzt, über die sowohl Formplatte 4 als auch Zwischenplatte 3 geschoben sind und die in korrespondierende Führungen 26 in Formplatte 2 (gestrichelt angedeutet) einführbar sind.

An die der Stirnfläche 14 abgekehrte Seite der Formplatte 2 schliesst eine Zwischenplatte 28 an, wobei sowohl Formplatte 2 wie auch Zwischenplatte 28 von Ausstossern 29 durchfahren werden, welche an Ausstosserplatten 30 angelenkt in einem Raum 31 bewegbar gelagert sind.

An den Raum 31 schliesst wiederum eine Aufspannplatte 32 an.

Der Klemmring 5 teilt sich nach Fig. 2 entlang einer Mittelachse M in zwei Halbringe 34 und 35, wobei einends vom Halbring 34 ein Schenkel 37 abkragt, der mit einem Gelenk 36 verbunden und um dieses drehbar gelagert ist.

Mit dem Schenkel 37 korrespondiert ein vom Halbring 35 abkragender Schenkel 38. Jeweils ein Teilbereich von Schenkel 37 und Schenkel 38 trägt eine sich verjüngende Einschnittfläche 39 (Fig. 1) über die in Schliesslage des Werkzeuges eine Klemmvorrichtung 40 geschoben ist, welche beide Halbringe 34 und 35 zusammenpresst.

An den Schenkeln 37 und 38 gegenüberliegenden Enden der Halbringe 34 und 35 kragen Schulterstücke 41 und 42 ab, welche sich ebenfalls in einen Teilbereich 43 keilförmig zueinander verjüngen und in Schliesslage des Werkzeuges durch eine Klemmvorrichtung zusammengehalten werden.

Das Gelenk 36 ist mit einem Stab 51 verbunden, der in einer an eine Trägerplatte 56 angeformten Führungsbuchse 52 bewegbar gelagert ist. Ueber diesen Stab 51 kann der Klemmring 5 durch eine — nicht dargestellte — Antriebsvorrichtung parallel zur Mittelachse M bewegt werden.

Um ein Verkanten des Klemmrings 5 zu verhindern, ist an den Halbring 35 eine Lasche 54 und an diese ein Führungsstab 53 angeformt, welcher in einer zweiten Führungsbuchse 55 an der Maschinenwand 56 ebenfalls bewegbar gelagert ist.

Zwischen Klemmring 5 und Felgenbett 17 ist eine Sprühvorrichtung 45 für das Aufbringen eines Kühlmediums auf das Felgenbett 17 angeordnet. Das abtropfende Kühlmedium wird in einer Rinne 46 aufgefangen und gesammelt.

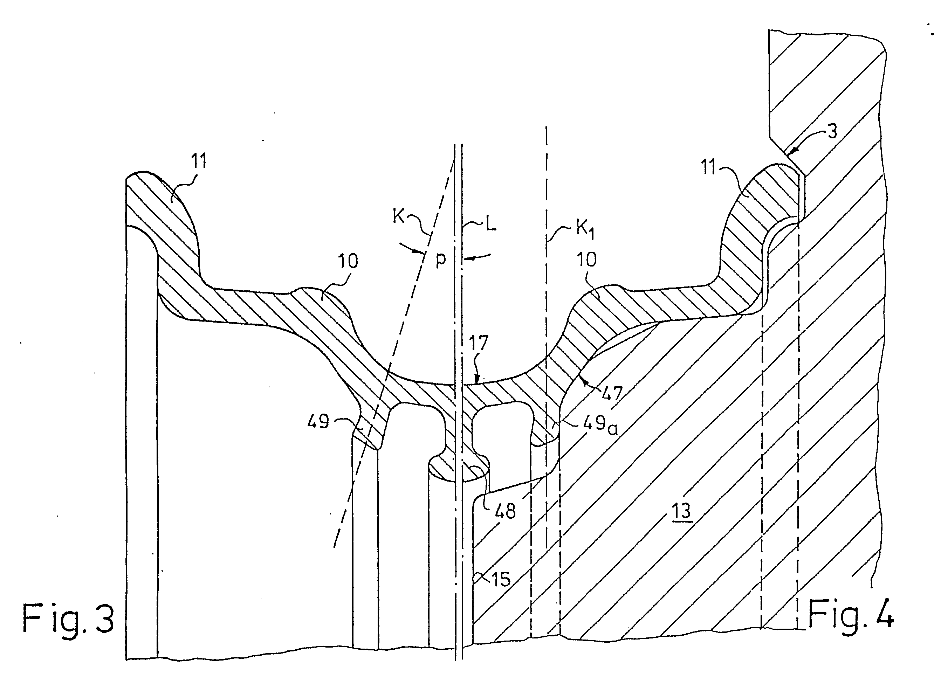

Nach Fig. 3 weist die Felge 1 auf der Innenseite 47 Vorsprünge auf, welche aus einem T-förmigen Mittelsteg 48 und diesen beidseits flankierenden Schenkelstegen 49 bestehen.

Schenkelsteg 49 beinhaltet eine Mittelachse K, welche vor dem Einbringen der Felge 1 in die Vorrichtung R mit der Mittelachse L des Mittelsteges 48, die gleichzeitig Symmetrieachse der Felge 1 ist, einen spitzen Winkel p bildet.

Beim Herstellungsvorgang des Verbundrades wird das freie Ende des Schenkelsteges 49 durch die Kontur der Plattenfläche 15 (Fig. 4) des Einsatzes 13 der Zwischenplatte 3 soweit in Richtung Mittelsteg 48 gedrückt, bis die Mittelachse K1 etwa parallel zur Mittelachse L verläuft. Der so veränderte Schenkelsteg ist mit 49a bezeichnet.

Zu Beginn des Herstellungsvorganges ist der Klemmring 5 mittels der Antriebsvorrichtung geführt durch die Stäbe 51 und 53 aus dem Werkzeug herausgefahren. Der Klemmring 5 wird durch Abheben des Halbringes 34 geöffnet, die — vorzugsweise aus Stahl, Magnesium oder Aluminium in Rollform-, Tiefzieh-, Druck- oder Strangpressverfahren hergestellte — Felge 1 an den Halbring 35 angelegt und durch Schliessen des Halbringes 34 fixiert.

Danach wird der Klemmring 5 mit Felge 1 zwischen Dorn 9 und Führungssäulen 25 in das Werkzeug zurückgefahren.

Nunmehr wird die bewegliche Formplatte 2 an die Felge 1 herangefahren, wobei die Plattenfläche 14 die Felge 1 zentriert.

Die Formplatte 2 verschiebt die Felge mit Klemmring 5 in Richtung x zur Zwischenplatte 3. Dabei greifen die Führungsbolzen 25 in die Führungen 26 ein und die Klemmvorrichtung 40 verkeilt die Schenkel 37 und 38 und die Schulterstücke 41 und 42. In diesem Stadium liegen auch Zwischenplatte 3 und Formplatte 4 eng aneinander.

Gleichzeitig erhöht sich der Pressdruck auf die bewegliche Formplatte 2. Dies führt dazu, dass die Schenkelstege 49 in ihre Stellung 49a gebracht werden.

Die in der Füllbüchse 21 befindliche Druckgussmasse wird nun mittels des Kolbens 22 durch die Oeffnung 20 in den Hohlraum 19 und von dort durch den Angusskegel 16 in den von den Plattenflächen 14 und 15 der Einsätze 13 und 12 und der Felge gebildeten Formraum gedrückt. Gleichzeitig setzt eine Kühlung der Felge 1 über die Sprühvorrichtung 45 ein, und das Druckgussmaterial erkaltet.

Jetzt wird die Formplatte 2 mit dem nunmehr gefertigten Rad und Klemmring 5 zurückgefahren. Die Ausstosser 29 heben den Radkörper so weit von der Formplatte 2 ab, bis diese zwischen Dorn 9 und Führungsbolzen 25 hindurch aus dem Werkzeug geschoben werden kann. Der Klemmring 5 wird geöffnet und das Rad entnommen.

### Ansprüche

1. Vorrichtung zum Herstellen von Fahrzeugrädern mit von einer kranzartigen Felge (1) umgebenem, gegossenem Radkörper (6), beispielsweise einer Radscheibe oder -schüssel, mit wenigstens einer den auszugiessenden Formraum begrenzenden Werkzeugwandung (14, 15), dadurch gekennzeichnet, dass einer Formplatte (2) eine Zwischenplatte (3) gegenüberliegt, zwischen denen die als Formteil dienende Felge (1) angeordnet ist, und deren einander zugekehrte Plattenflächen (14, 15) zusammen mit der Felge (1) Formteile für den Radkörper (6) sind, und dass den Platten (2, 3) eine weitere Formplatte (4) zugeordnet ist, welche Einrichtungen (21, 22, 20, 19) zum Einbringen des Gusswerkstoffes aufweist, wobei um die Felge (1) wenigstens ein Klemmring (5) angeordnet ist.

2. Vorrichtung nach Anspruch 2, dadurch gekennzeichnet, dass der Klemmring (5) aus zwei Halbringen (34, 35) besteht und aus dem Werkzeug herausfahrbar ist, wobei zumindest ein Halbring (34) an einem Gelenk (36) drehbar gelagert ist.

3. Vorrichtung nach Anspruch 2, dadurch gekennzeichnet, dass an jeden der beiden Halbringe (34, 35) einends abkragende Schenkel (37, 38), andernends abkragende Schulterstücke (41, 42) angeformt sind.

4. Vorrichtung nach Anspruch 3, dadurch gekennzeichnet, dass Schulterstücke (41, 42) und/ oder Schenkel (37, 38) keilförmige Flächen und/ oder Einschnitte (39, 43) aufweisen, über die eine Klemmvorrichtung (40) schiebbar ist.

5. Vorrichtung nach wenigstens einem der Ansprüche 1-4, dadurch gekennzeichnet, dass die Felge (1) auf ihrer Innenfläche (47) mit etwa in Radialrichtung abragenden Vorsprüngen (48, 49) versehen ist.

6. Vorrichtung nach Anspruch 5, dadurch gekennzeichnet, dass die Vorsprünge als ein querschnittlich T-förmiger Mittelsteg (48) mit diesen beidseits flankierenden Schenkelstegen (49) ausgebildet sind.

7. Vorrichtung nach Anspruch 6, dadurch gekennzeichnet, dass die beiden Schenkelstege (49) mit dem zwischen ihnen liegenden Teil (48) des Felgenprofils eine Klammer bilden, wobei die freien Enden der Schenkelstege (49) in der Art von Klammerschenkeln mittels der Plattenflächen (14, 15) ortsveränderbar sind.

8. Vorrichtung nach wenigstens einem der Ansprüche 1-7, dadurch gekennzeichnet, dass über bzw. um die Felge (1) gegebenenfalls in bzw. an den Klemmring (5) eine Sprühvorrichtung (45) zum Aufbringen eines Kühlmediums auf die Felge (1) angeordnet ist.

9. Vorrichtung nach wenigstens einem der Ansprüche 1-8, dadurch gekennzeichnet, dass die Plattenfläche (15) der Zwischenplatte (3) über wenigstens einen Angusskegel (16) mit einem den Anguss aufnehmenden Hohlraum (19) der Formplatte (4) in Verbindung steht, welcher über eine Oeffnung (20) an den von einem Kolben (22) durchfahrenden Innenraum einer Füllbüchse (21) anschliesst.

10. Vorrichtung nach wenigstens einem der Ansprüche 1-9, dadurch gekennzeichnet, dass an mindestens einer Ausstosserplatte (30) in einem Raum (31) bewegbare Ausstosser (29) geführt sind, welche die Formplatte (2) durchfahren.

### Claims

1. Device for manufacture of vehicle wheels having a cast wheel body (6), for example a wheel disc or dish surrounded by an annular rim (1), with at least one tool wall (14, 15) delimiting the mould cavity to be filled, characterised in that a mould plate (2) lies opposite an intermediate plate (3), between which is arranged the rim (1) serving as a mould part, and the plate surfaces (14, 15) of which, facing one another, are, together with the rim (1), mould parts for the wheel body (6), and that a further mould plate (4) is associated with the plates (2, 3), which has devices (21, 22, 20, 19) for introduction of the molten material, while at least one clamping ring (5) is arranged around the rim (1).

2. Device according to claim 1, characterised in that the clamping ring (5) consists of two half-rings (34, 35) and can be removed from the tool, while at least one half-ring (34) is mounted to rotate on a hinge (36).

3. Device according to claim 2, characterised in that on each of the two half-rings (34, 35) bent out projecting arms (37, 38) are formed at one end, and bent out shoulder pieces (41, 42) at the other end.

4. Device according to claim 3, characterised in that the shoulder pieces (41, 42) and/or arms (37, 38) have wedge-shaped surfaces and/or recesses (39, 43) over which a clamping device (40) can be pushed.

5. Device according to at least one of claims 1-4, characterised in that the rim (1) is provided with projections (48, 49) projecting out approximately radially on its inner surface (47).

6. Device according to claim 5, characterised in that the projections (48, 49) are, in cross section, in the form of a T-shaped middle flange (48) with side flanges (49) flanking it on both sides.

7. Device according to claim 6, characterised in that the two side flanges (49) form a clamp together with the part (48) of the rim lying between them, while the free ends of the side flanges (49) can be displaced by the plate faces (14, 15), like clamp jaws.

8. Device according to at least one of claims 1-7, characterised in that a spraying device (45) for applying a coolant onto the rim (1) is arranged over or round the rim (1), if desired in or on the clamping ring (5).

9. Device according to at least one of claims 1-8, characterised in that the die surface (15) of the intermediate plate (3) is connected, via at least one conical metal feed channel (16), to a cavity (19) in the mould plate (4) accommodating the feed head, and this cavity joins up via an opening (20) to the interior of a feed sleeve (21) through which a piston (22) passes.

10. Device according to at least one of claims 1-9, characterised in that ejector pins (29), which pass through the mould plate (2), and can be moved in a space (31), are carried on at least one ejector plate (30).

**Revendications**

1. Dispositif pour fabriquer des roues de véhicules, comportant un corps de roue (6), par exemple un flasque de roue, coulé, entouré d'une jante (1) en forme de couronne, une paroi au moins (14, 15) de l'outil de moulage limitant le volume du moule dans lequel se fait la coulée, caractérisé par le moyen qu'en face d'une plaque de moule (2) se trouve une plaque intermédiaire (3), entre lesquelles est disposée la jante (1), qui sert de partie du moule, et dont les surfaces de plaque (14, 15), tournées l'une vers l'autre, constituent, avec la jante (1) des pièces de moule du corps de roue (6) ; et par le moyen qu'aux plaques (2, 3) correspond une autre plaque de moule (4), qui comprend des dispositifs (21, 22, 20, 19) pour amener le matériau en fusion, au moins une couronne de serrage (5) étant disposée autour de la jante (1).

2. Dispositif selon la revendication 2, caractérisé en ce que la couronne de serrage (5) est constituée de deux demi-couronnes (34, 35) et qu'elle peut sortir de l'outil, étant précisé qu'au moins une demi-couronne (34) peut tourillonner sur une articulation (36).

3. Dispositif selon la revendication 2, caractérisé en ce que sur chacune des deux demi-couronnes (34, 35) sont venus de forme d'un côté des embouts (37, 38) qui viennent en chanfrein et de l'autre côté des épaulements (41, 42) qui viennent également en chanfrein.

4. Dispositif selon la revendication 3, caractérisé en ce que les épaulements (41, 42) et/ou les embouts (37, 38) présentent des surfaces et/ou des joints (39, 43) en forme de coin, sur lesquels peut coulisser un dispositif de serrage (40).

5. Dispositif selon au moins l'une des revendications 1-4, caractérisé en ce que la jante (1) est munie, sur sa surface interne (47), de saillies (48, 49) qui débordent à peu près en direction radiale.

6. Dispositif selon la revendication 5, caractérisé en ce que les saillies ont la forme d'une nervure médiane (48) de section en forme de T avec des ailes (49) qui viennent de part et d'autre de cette nervure.

7. Dispositif selon la revendication 6, caractérisé en ce que les deux ailes (49) constituent, avec la partie (48) du profil de jante située entre elles, une agrafe, les positions des extrémités libres des ailes (49) pouvant être modifiées, à l'aide des surfaces de plaques (14, 15), à la façon des ailes d'une agrafe.

8. Dispositif selon au moins l'une des revendications 1-7, caractérisé par le moyen que sur ou autour de la jante (1) est éventuellement disposé, dans ou contre la couronne de serrage (5), un dispositif de pulvérisation (45) pour amener un fluide de refroidissement sur la jante (1).

9. Dispositif selon au moins l'une des revendications 1-8, caractérisé en ce que la surface (15) de la plaque intermédiaire (3) est en liaison, par l'intermédiaire d'au moins un cône de masselotte (16), avec un volume creux (19) de la plaque de moule (4), qui reçoit la masselotte et qui, par l'intermédiaire d'une ouverture (20), est relié au volume intérieur, parcouru par un piston (22), d'une tubulure de remplissage (21).

10. Dispositif selon au moins l'une des revendications 1-9, caractérisé en ce que les éjecteurs (29), qui traversent la plaque de moule (2), peuvent se déplacer dans un volume (31) sur au moins une plaque d'éjecteurs (30).

Fig.1

Fig.2

Fig.3

Fig.4

0 033 712